# EUROPEAN PATENT APPLICATION

(11) **EP 2 860 675 A1**
(43) Date of publication of application: **15.04.2015**
(21) Application number: 14176132.0
(22) Date of filing: 08.07.2014
(51) Int. Cl.: G06Q 10/06

(54) **Method and system for managing operation of multi-line public transportation**

(30) Priority: 10.10.2013 KR 20130120640
(71) Applicant: LG CNS Co., Ltd., Yeongdeungpo-gu Seoul 150-881 (KR)
(72) Inventor: Park, Myung Gyu, Seoul 150-881 (KR); Keum, Hyung Sub, Seoul 150-881 (KR)
(74) Representative: Jansen, Cornelis Marinus

(57) **Abstract**

A method for managing operation of multi-line transportation includes setting an operation line of a transportation system corresponding to a day type of an operation day, generating an operation pattern of the operation line based on the day type of the operation day, generating a vehicle operation plan using the operation line and the operation pattern, generating a driver operation plan based on the vehicle operation plan, and assigning real vehicles and real drivers based on the vehicle operation plan and the driver operation plan, respectively. The operation pattern includes at least one time band characteristic of the operation day that is associated with demand for transportation and assigned to a section of a route in the operation line.

## Description

### CROSS-REFERENCE TO RELATED APPLICATIONS

The present application claims priority to Korean Patent Application No. 10-2013-0120640, filed on October 10, 2013, which is incorporated by reference herein in its entirety.

### BACKGROUND

In general, a public transportation company establishes a plan for operating a line of public transportation based on customer demand. Typically, such an operation plan specifies a predetermined number of buses and drivers that are assigned to the transportation line. In addition, the first and last bus times and the time intervals between successive buses are fixed. However, such a fixed operation plan is not efficient when demand fluctuates.

### SUMMARY

Embodiments of the present disclosure are directed to a method and system for managing the operation of multi-line public transportation. Embodiments generate various operation plans for a transportation line according to the demand for public transportation, assign a proper operation plan from among the various possible operation plans for a specific day of operation of the transportation line, and assign vehicles and drivers to be used in actual implementation of the operation plan.

Embodiments are also directed to generating operation plans for a plurality of different lines in consideration of a generated public transportation line, an operation interval, and a correlation between different lines. In accordance with an embodiment, since a public transportation vehicle and/or driver may be assigned to more than one line, the efficiency of the public transportation operation plan is increased.

An embodiment of the present disclosure provides a method for operating public transportation in multi-line including: setting an operation line which is being operated or scheduled to be operated and an operation pattern based on travel characteristics; generating an operation plan of one or more virtual logical vehicles for the operation line, using the operation line and the operation pattern; and generating an operation plan of one or more virtual logical drivers for the operation line, using the operation plan of the virtual logical vehicles.

An embodiment of the present disclosure provides a system for operating public transportation in multi-line including: a raw data generation unit configured to set an operation line which is being operated or scheduled to be operated and an operation pattern based on travel characteristics; a vehicle operation plan generation unit configured to generate an operation plan of one or more virtual logical vehicles for the operation line, using the operation line and the operation pattern; and a driver operation plan generation unit configured to generate an operation plan of one or more virtual logical drivers for the operation line, using the operation plan of the virtual logical vehicles.

Embodiments are directed to a system, a non-transitory computer-readable medium, and a method. A method for managing operation of multi-line transportation in accordance with an embodiment includes setting an operation line of a transportation system corresponding to a day type of an operation day, generating an operation pattern of the operation line based on the day type of the operation day, generating a vehicle operation plan using the operation line and the operation pattern, generating a driver operation plan based on the vehicle operation plan, assigning real vehicles based on the vehicle operation plan, and assigning real drivers based on the driver operation plan. The operation pattern includes at least one time band characteristic of the operation day that is associated with demand for transportation and assigned to a section of a route in the operation line..

### BRIEF DESCRIPTION OF THE DRAWINGS

FIG. 1 is a block diagram of a system for managing operation of multi-line public transportation in accordance with an embodiment of the present disclosure.
FIG. 2 is a block diagram of an operation line generation unit of a system for managing operation of multi-line public transportation in accordance with an embodiment of the present disclosure.
FIG. 3 is a block diagram of a vehicle operation plan generation unit in a system for managing operation of multi-line public transportation in accordance with an embodiment of the present disclosure.
FIG. 4 is a block diagram of a hardware configuration of a system for managing operation of multi-line public transportation in accordance with an embodiment of the present disclosure.
FIG. 5 is a flowchart illustrating a method for managing operation of multi-line public transportation in accordance with an embodiment of the present disclosure.
FIG. 6 is a flowchart illustrating a method of generating an operation line in accordance with an embodiment of the present disclosure.
FIG. 7 is a flowchart illustrating a method of generating resource information in accordance with an embodiment of the present disclosure.
FIG. 8 is a flowchart illustrating a method of generating an operation pattern in accordance with an embodiment of the present disclosure.
FIG. 9 is a flowchart illustrating a method of generating a vehicle operation plan in accordance with an embodiment of the present disclosure.
FIG. 10 is a flowchart illustrating a method of generating a driver operation plan in accordance with an embodiment of the present disclosure.
FIG. 11 is a flowchart illustrating a method of assigning a physical vehicle in accordance with an embodiment of the present disclosure.
FIG. 12 is a flowchart illustrating a method of assigning a physical driver in accordance with an embodiment of the present disclosure.

### DETAILED DESCRIPTION OF EMBODIMENTS

Embodiments of the present disclosure will be described below in more detail with reference to the accompanying drawings. However, the present invention should not be construed as being limited to the embodiments set forth herein. Rather, the embodiments disclosed herein are provided so that this disclosure will convey the scope of the present invention to those skilled in the art.

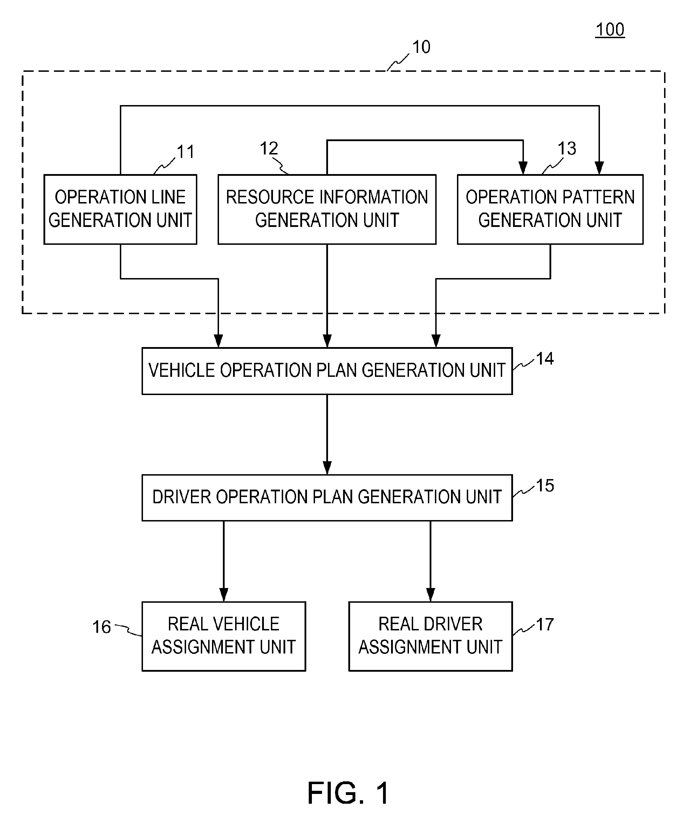

FIG. 1 is a block diagram of a system for managing operation of multi-line public transportation in accordance with an embodiment of the present disclosure. A system 100 for managing operation of multi-line public transportation includes a raw data generation unit 10, a vehicle operation plan generation unit 14, and a driver operation plan generation unit 15. The raw data generation unit includes an operation line generation unit 11 and an operation group generation unit 13.

The raw data generation unit 10 may set an operation line, which is a line of transportation that is currently in operation or scheduled to operate, and an operation pattern based on traffic and travel characteristics. The vehicle operation plan generation unit 14 establishes a plan for use of one or more virtual logical vehicles for the operation line (e.g., a "vehicle operation plan"), using the operation line and the operation pattern, which are set by the raw data generation unit 10. The driver operation plan generation unit 15 establishes a plan for use of one or more virtual logical drivers for the operation line, based on the virtual logical vehicles generated by the vehicle operation plan generation unit 14 (e.g., a "driver operation plan").

The raw data generation unit 10 may further include a resource information generation unit 12, in addition to the operation line generation unit 11 and the operation group generation unit 13.

Furthermore, a system for managing operation of multi-line public transportation according to an embodiment of the present disclosure may further include a real vehicle assignment unit 16 and a real driver (or physical driver) assignment unit 17.

According to conventional methods, allocation of resources for a line of transportation is carried out by considering primarily the number of vehicles assigned to the line. Thus, the quality of public transportation services may be degraded. Embodiments of the present disclosure use an operation pattern as well as an operation line to generate an operation plan that allocates resources to the operation line and determines how those resources are managed in operation of the line. In addition, embodiments utilize virtual logical vehicles and virtual logical drivers to establish an operation plan on a given day of operation of the line. As a result, real vehicles (or physical vehicles) and real drivers are not subordinated to a specific operation line, and resources can be allocated more efficiently.

The operation line generation unit 11 generates an operation line of public transportation. The operation line generation unit 11 may set a new operation line based on an existing operation line and/or an operation line scheduled to operate in the future. Furthermore, the operation line generation unit 11 may generate garage information of a public transportation vehicle. In an embodiment, garage information includes the location of one or more garages.

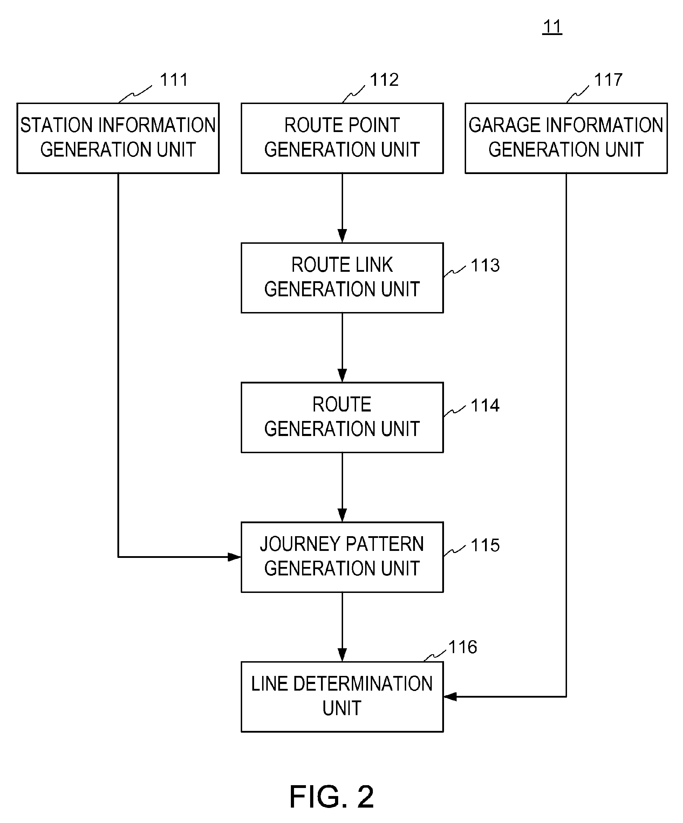

FIG. 2 is a block diagram of an operation line generation unit of a system for managing operation of multi-line public transportation in accordance with an embodiment of the present disclosure. An operation line generation unit 11 may include a station information generation unit 111, a route point generation unit 112, a route link generation unit 113, a route generation unit 114, a journey pattern generation unit 115, a line determination unit 116, and a garage information generation unit 117.

The station information generation unit 111 may generate and store station information. In an embodiment, a station is a location where a public transportation vehicle is to drop off or pick up passengers. Station information includes location coordinates, a name, and an ID of a preset station and whether the station corresponds to an origin or a destination point in a route.

The route point generation unit 112 may generate route points corresponding to main nodes, such as a crossroad included in an existing operation line and/or an operation line scheduled to operate, or a junction of the operation line. In addition, route points may include a point which is expected to become a node in the future or a point at which a characteristic of a road changes, such as a point at which the speed limit changes. The route point generation unit 112 may store the location coordinates and names or identifiers of the route points. In an embodiment, the route point generation unit 112 generates route points based on received data.

The route link generation unit 113 may select two route points among the route points generated through the route point generation unit 112, and generate a route link connecting the two route points. The route link may serve as the smallest unit or building block that forms an operation line. That is, a plurality of route links forms an operation line. In a route link generated through the route link generation unit 113, one route point of the route link is determined to be an origin point of the link, and the other route point is determined to be a destination point of the link. Thus, the route link has a directionality defined by the origin point of the route link and the destination point of the route link, such that a vehicle on the route link in the operation line moves from the route point serving as the origin to the route point serving as the destination.

The directionality of the route link is one of a plurality of attributes generated and stored by the route link generation unit 113. Other route link attributes include information on the speed limit in the route link and the distance between the route points forming the route link. The speed limit, which is an attribute of the route link, may be used when calculating a movement time between stations in order to generate an operation plan.

The route generation unit 114 may connect a plurality of route links generated by the route link generation unit 113 to generate a route in an operation line. That is, the route generated by the route generation unit 114 may be generated as a group of route links, which are connected to form one route. In an embodiment, the route generation unit 114 connects the route links in a route in the same direction by considering the directionality of the route links. For example, the route generation unit connects the destination point of a first route link and the origin point of a second route link, and sequentially repeats the process to form a route. In an embodiment, the route generation unit 114 determines the directionality of the route based on the directionality attributes of the route links included in the route.

In an embodiment, the route generation unit 114 also determines the origin point of the route and the destination point of the route. The origin point of the route corresponds to the first origin point of the first link in the route, and the end point of the route may correspond to the last destination point of the last link in the route. Furthermore, the route generation unit 114 may generate and store various attributes of the route, such as information on the length of the route, which may be equal to the sum of distances between the origins and the destinations of the respective route links included in the route, the name of the route, and the directionality of the route.

The journey pattern generation unit 115 may combine the route generated by the route generation unit 114, the station information generated by the station information generation unit 111, and generate a journey pattern including the stations. In the journey pattern, each of the stations has a number indicating the order in which a public transportation vehicle stops at the station. In an embodiment, the first number is assigned to the station which is the closest to the origin point of the route, and the last number is assigned to the station which is the closest to the destination point of the route. The first station and the last station in the journey pattern become the origin and destination of the public transportation route. The origin and destination of the route may correspond to points through which a public transportation vehicle enters or comes out of a garage or moves to the origin or destination of another public transportation route.

The journey pattern includes an attribute corresponding to the distance between the first station and the last station in the route. Furthermore, a vehicle stopping point for each of the stations in the journey pattern, i.e., where a public transportation vehicle stops for passengers, may be defined as a point in the route where a vehicle can stop and that has the minimum distance between the station and the route. The distance between respective stations may be defined as a distance between two stopping points on the route.

The line determination unit 116 may generate a public transportation line, e.g., an operation line, including one, two, or more of the journey patterns generated by the journey pattern generation unit 115. The line determination unit 116 may assign an identifier to the generated public transportation line. The identifier may be a name or number, which public transportation users may use to identify the line. In an embodiment, one operation line includes the same route as another operation line, but each includes a different number of stopping points. For example, an express line includes a fewer number of stopping points than a normal line.

In an embodiment, the operation line generated by the line determination unit 116 includes garage information. The garage information generation unit 117 may generate garage information. Garage information includes location coordinates of a garage for storing vehicles used for operating public transportation. In an embodiment, garage information includes the location of one or more garages that are operated by a transportation company assigned to the operation line. In an embodiment, garage information includes the location of one or more garages and that are near the operation line and where public transportation vehicles may be stored.

The operation line for public transportation and the garage information of public transportation vehicles, which are generated through the operation line generation unit 11, may be used to generate a vehicle operation plan to be described below.

Referring back to FIG. 1, the resource information generation unit 12 may receive and/or generate information on a transportation company and vehicles and drivers of the transportation company. Resources used in an operation plan may include transportation companies, vehicles, and drivers. A transportation company is the largest unit that receives a public transportation line and operates the public transportation line.

The resource information generation unit 12 may store attributes of each vehicle and driver of a transportation company. Vehicles may be classified depending on the number of passengers they can carry or their type (e.g., single-decker bus, double-decker bus, minibus, etc.). Thus, each vehicle may have an attribute corresponding to vehicle type and an attribute corresponding to the number of passengers it can carry. Furthermore, attributes of a driver may include the transportation company with which he or she is associated and the types of vehicles that he or she can drive. Since the types of vehicles that can be driven by each driver may be limited, a driver may have attributes including a driver's license type, an ID required for operation, and a password (PW).

The resource information generation unit 12 may generate resource information based on the attributes of the transportation company, the vehicles, and the drivers, as described above. That is, the resource information generation unit 12 may first generate transportation companies to receive a public transportation line, add vehicles belonging to each of the generated transportation companies and attributes thereof, and add drivers belonging to each of the generated transportation companies and attributes thereof, thereby generating resource information.

The operation pattern generation unit 13 generates an operation pattern for each operation line generated by the operation line generation unit 11. The operation pattern generation unit 13 may determine the type of a day (hereafter, a "day type") on which public transportation is to operate (hereafter, referred to as an "operation day") and characteristics for time bands on the operation day, in consideration of the demand for public transportation and an operation time for each time band depending on traffic situations.

The operation pattern generation unit 13 may determine the type of an operation day (hereafter, referred to as "day type") by considering various factors having an influence on the demand for public transportation, such as days of the week, national holidays, vacation seasons, events, and holidays. The operation pattern generation unit 13 may set an operation line for each day type by considering the demand for specific routes or portions of routes, which varies depending on the operation day. Furthermore, the operation pattern generation unit 13 may allocate a transportation company to the set operation line based on information from the resource information generation unit 12.

The operation pattern generation unit 13 may divide the operation day into time bands based on the day type, and generate a characteristic for each time band. The characteristic for each time band is generated based on the day type. For example, the characteristic may indicate a high demand for public transportation for a route or a portion of a route during a specific time band on an event day. In another example, the characteristic may indicate a low demand for public transportation for a route or a portion of a route if the day type is a national holiday.

In an embodiment, the operation pattern generation unit 13 assigns a characteristic associated with demand to each time band of the operation day. In another embodiment, the operation pattern generation unit 13 assigns a characteristic associated with demand to only certain time bands of the operation day. In an embodiment, the operation pattern generation unit 13 also determines a characteristic for a time band of an operation day by taking traffic conditions into consideration, which may result from, for example, common commute routes, car accidents, road construction, etc.

The operation pattern generation unit 13 assigns the characteristic for each time band to a section between one station and the next station in a route in the operation line generated through the operation line generation unit 11.

Furthermore, the operation pattern generation unit 13 may allocate a transportation company based on information from the resource information generation unit 12 to the operation line set for each day type.

The vehicle operation plan generation unit 14 may receive the operation line generated by the operation line generation unit 11, the operation pattern, e.g., the information on the day type, the time band characteristic, and the operation section of the route to which a characteristic for each time band is applied, and the transportation company allocated to the operation line, and generate a vehicle operation plan for each operation day. The vehicle operation plan generation unit 14 may generate a vehicle operation plan based on virtual logical vehicles, instead of real physical vehicles.

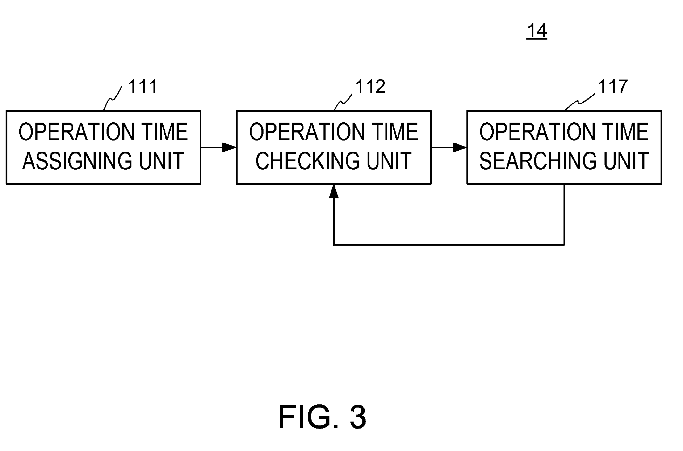

FIG. 3 is a block diagram of a vehicle operation plan generation unit in a system for managing operation of multi-line public transportation in accordance with an embodiment of the present disclosure.

Referring to FIG. 3, the vehicle operation plan generation unit 14 may include an operation time assigning unit 141, an operation time checking unit 142, and an operation line searching unit 143.

When there is an operation line for which a vehicle operation plan is to be generated, the operation time assigning unit 141 assigns a first vehicle departure time, a last vehicle departure time, and an interval between successive vehicles depending on a route of the operation line. The operation time assigning unit 141 may generate a vehicle operation schedule for assigning vehicles from the first vehicle to the last vehicle for each operation line.

The operation time checking unit 142 may assign a virtual logical vehicle to the vehicle operation schedule generated through the operation time assigning unit 141, and check an operation time of the logical vehicle. More specifically, when there is a vehicle operation schedule to which no virtual logical vehicles are assigned, the operation time checking unit 142 generates a new virtual logical vehicle, assigns the virtual logical vehicle to the vehicle operation schedule, and checks the departure time of the assigned virtual logical vehicle at the first station and a movement time of the virtual logical vehicle from the garage to the first station. Then, the operation time checking unit 142 checks the time it takes for the logical vehicle to move to the next station (hereafter, "a movement time"). The operation time checking unit 142 repeats the process of checking a movement time for moving to each successive station until the virtual logical vehicle arrives at the last station in a route. The operation of the virtual logical vehicle for the route of the operation line is then terminated.

While checking the movement times for moving to each successive station, the operation time checking unit 142 may consider the section of the route to which a characteristic for each time band is applied the characteristic for each time band being determined according to the day type of the operation day for which the vehicle operation plan is intended to be generated.

When a virtual logical vehicle terminates operation for one route in an operation line or on one operation line, the operation line searching unit 143 may search for another route in the same operation line or in another operation line for the virtual logical vehicle. In an embodiment, the operation line searching unit 143 searches for another route or operation line for the virtual logical vehicle if the amount of time that the virtual logical vehicle had operated (i.e., the "operation time") upon termination of the previous route does not exceed a preset maximum operation time per day. In an embodiment, the operation time of the virtual logical vehicle considered by the operation line searching unit 143 includes the time it takes for the virtual logical vehicle to move from a garage to the first station of a route.

In an embodiment, the operation line searching unit 143 searches for the next route for the virtual logical vehicle. In an embodiment, another route is selected if one or more conditions are satisfied. In an embodiment, such conditions may include one or more of the following: whether or not, after the virtual logical vehicle's operation on one route is terminated, the virtual logical vehicle can begin operation on the next route within a preset time limit; if a route is in another operation line, whether or not the operation line is assigned to the same transportation company as the route on the previous operation line, i.e., whether the new operation line is assigned to the transportation company of the virtual logical vehicle; whether or not the virtual logical vehicle is able to move to the first station of the next route before the start time of the next route, after arriving at the last station of the previous route.

If such conditions are satisfied, the operation line searching unit 143 may assign the new route to the virtual logical vehicle, and the operation time checking unit 142 may perform the process of checking a movement time between stations on the newly assigned route, as described above.

If such conditions are not satisfied, the operation line searching unit 143 moves the virtual logical vehicle to the closest garage. In an embodiment, the operation line searching unit 143 checks the operation time of the virtual logical vehicle when the logical vehicle arrives at the garage, by considering the time it takes to move to the garage. In an embodiment, if the operation time of the virtual logical vehicle, having arrived at the garage, does not exceed the preset maximum operation time per day, the operation line searching unit 143 may perform the process of searching for a new route. Even in this embodiment, if the route is in another operation line, the operation line must be an operation line assigned to the transportation company of the virtual logical vehicle. If so, the operation line searching unit 143 may search for a new route in the new operation line for the virtual logical vehicle and assign the new route in the new operation line to the virtual logical vehicle. The operation time checking unit 142 may then perform the process of checking a movement time between stations on the newly assigned operation line, as described above.

The driver operation plan generation unit 15 may receive the vehicle operation plan generated by the vehicle operation plan generation unit 14, assign a virtual logical driver to each virtual logical vehicle, and generate a driver operation plan. When there is a virtual logical vehicle to which no virtual logical driver is assigned among the logical vehicles generated by the vehicle operation plan generation unit 14, the driver operation plan generation unit 15 generates a new virtual logical driver. Then, the driver operation plan generation unit 15 assigns the generated virtual logical driver to the operation plan of the virtual logical vehicle.

When the operation time of the operation plan of the virtual logical vehicle does not exceed a preset maximum operation time per operation for the virtual logical driver, the driver operation plan generation unit 15 may search operation plans of other virtual logical vehicles to which no virtual logical driver is assigned, and assign the next operation plan to the virtual logical driver. When the operation time of the first operation plan of the first virtual logical vehicle exceeds the maximum operation time per operation for the virtual logical driver, the driver operation plan generation unit 15 may schedule a preset minimum break time for the virtual logical driver. In an embodiment, the minimum break time is set in a predetermined range from the time at which the first vehicle operation plan of the virtual logical vehicle is terminated. In an embodiment, after determining that the maximum operation time for the virtual logical driver, including the minimum break time, has not been exceeded, the driver operation plan generation unit 15 may search the operation plans of the other virtual logical vehicles to which no virtual logical driver is assigned, and assign another vehicle operation plan to the virtual logical driver.

In an embodiment, a driver operation plan generated by the driver operation plan generation unit 15 satisfies one or more of the following conditions. First, an operation time of a virtual logical driver does not exceed a preset maximum operation time per operation. Second, an operation time of a virtual logical driver does not exceed a preset maximum operation time per day. Third, a virtual logical driver receives a preset minimum break time after one operation. Fourth, a virtual logical driver can drive a plurality of types of vehicles, and operate on a plurality of operation lines. Fifth, the minimum operation unit for a virtual logical driver is set to route in an operation line.

The vehicle assignment unit 16 may assign real vehicles according to the vehicle operation plan generated by the vehicle operation plan generation unit 14. The vehicle assignment unit 16 may assign real vehicles of a transportation company to corresponding virtual logical vehicles according to the vehicle operation plan generated by the vehicle operation plan generation unit 14. That is, the vehicle assignment unit 16 may allocate physical vehicles for actual operation on each operation day.

Thus, the vehicle operation plan generation unit 14 may determine how many vehicles are needed for an operation day by generating virtual logical vehicles according to the vehicle operation plan for each operation day. In an embodiment, a vehicle operation plan is generated based on available actual resources. In another embodiment, a vehicle operation plan is generated before consideration of actual resources. As a result of a vehicle operation plan in accordance with an embodiment, vehicles are not subordinated to a single operation line and allocation of actual resources is more efficient.

The vehicle assignment unit 16 may check whether there is a virtual logical vehicle to which no real vehicle is assigned, by referring to the vehicle operation plan generated by the vehicle operation plan generation unit 14. When there is a virtual logical vehicle to which no real vehicle is assigned, the vehicle assignment unit 16 may check the transportation company of the virtual logical vehicle and then check information on the real vehicles of the transportation company.

The vehicle assignment unit 16 may check whether there are unallocated real vehicles among the real vehicles of the transportation company. The vehicle assignment unit 16 checks whether there is an unallocated real vehicle in a garage at which the virtual logical vehicle terminated operation on the day before the corresponding operation day and started operation on the operation day in accordance with the vehicle operation plan. When there is an unallocated real vehicle in the garage, the vehicle assignment unit 16 may assign the real vehicle in the garage to the virtual logical vehicle. When there is no real vehicle in the garage, the vehicle assignment unit 16 may assign a real vehicle from the closest garage to the virtual logical vehicle.

The driver assignment unit 17 may assign a real driver according to the driver operation plan generated by the driver operation plan generation unit 15. In an embodiment, the driver assignment unit 17 may assign a real driver of a transportation company to the virtual logical driver according to the driver operation plan generated by the driver operation plan generation unit 15. That is, the driver assignment unit 17 may allocate physical drivers for actual operation on each operation day.

Thus, the driver operation plan generation unit 15 may determine how many drivers are needed for an operation day according to the driver operation plan for each operation day. In an embodiment, a driver operation plan is generated based on available actual resources. In another embodiment, a driver operation plan is generated before consideration of actual resources. As a result of a driver operation plan in accordance with an embodiment, drivers are not subordinated to a single operation line and allocation of actual resources is more efficient.

The driver assignment unit 17 may check whether there is a virtual logical driver to which no real driver is assigned, by referring to the driver operation plan generated by the driver operation plan generation unit 15. When there is a virtual logical driver to which no real driver is assigned, the driver assignment unit 17 may check the transportation company to which the virtual logical driver belongs, and then check for an available real driver using the information on the real drivers of the transportation company.

In an embodiment, the driver assignment unit 17 may check the operation time of the virtual logical driver, and then check for availability of a real driver for the corresponding operation time from among the real drivers of the transportation company to which the virtual logical vehicle belongs. During the process of checking for an available real driver, if the driver assignment unit 17 finds an available night-shift driver who has worked on the previous day, the driver assignment unit 17 may determine that the night-shift driver cannot work in the morning of the next day. Furthermore, the driver assignment unit 17 may determine that a driver having worked a preset number of consecutive days cannot work on another consecutive day. In an embodiment, the driver assignment unit 17 also checks whether the real driver can drive the type of bus allocated to the operation line. The driver assignment unit 17, having found an available real driver satisfying such conditions, may assign the real driver to the virtual logical driver. Then, the allocation of public transportation vehicles and drivers for each operation day may be completed.

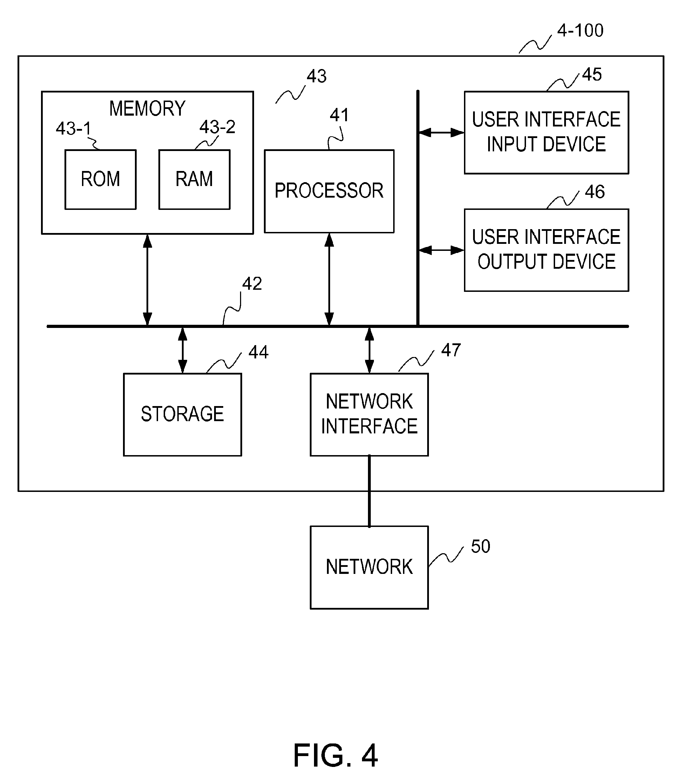

FIG. 4 illustrates a hardware configuration of a system 4-100 for managing operation of multi-line public transportation in accordance with an embodiment of the present disclosure. The system includes a processor or CPU 41 that is in communication with a variety of other components via a bus 42. The processor 41 controls operations with other components, and executes computer code for managing operation multi-line transportation with the other components. In an embodiment, one or more of the units described above with respect to FIGS. 1 to 3 comprise computer code executed by the processor.

Other components of the system include, but are not limited to, a non-transitory computer-readable storage medium, such as a memory 43, including a read only memory (ROM) 43-1 and a random access memory (RAM) 43-2, and also a higher capacity non-transitory computer readable storage medium 44. One or more of these components may be employed in the system to store the computer code including instructions for managing operation of multi-line public transportation.

The system also includes a network interface element 47. This network interface element 47 allows information, data, and/or signals to be transmitted between the system and a network 50. Thus, in an embodiment, some information, such as resource information, garage information, station information, transportation companies, information related to attributes of route links, etc., and preset or predetermined values may be received by respective units through the network 50.

Moreover, system includes a user interface input device 45 and a user interface output device 46. A user, or one who is managing or operating the system, may communicate with the system via the user interface input device 45 and the user interface output device 46. Thus, in an embodiment, some information, such as resource information, garage information, station information, transportation companies, information related to attributes of route links, etc., and preset or predetermined values may be input by a user and received at respective units.

In an embodiment, the user interface input device 45 is a keyboard, pointing device such as a mouse, trackball, touchpad, or graphics tablet, a scanner, a touchscreen incorporated into a display, or other type of input device. In general, use of the term "input device" is intended to include all possible mechanisms for inputting information, data, and or commands to the system.

Information, such as various operation lines and operation plans for the various operation lines, may be provided to the user at a user interface output device 46 of the system. The user interface output device 46 may include a visual output device, such as a display screen, but is not limited thereto. The term "output device" is intended to include all possible mechanisms for outputting information to a user, and may include a visual output device alone, or in combination with any of an auditory output device, such as a speaker, and a haptic output device.

Embodiments of the present disclosure also provide a method for managing operation of multi-line public transportation.

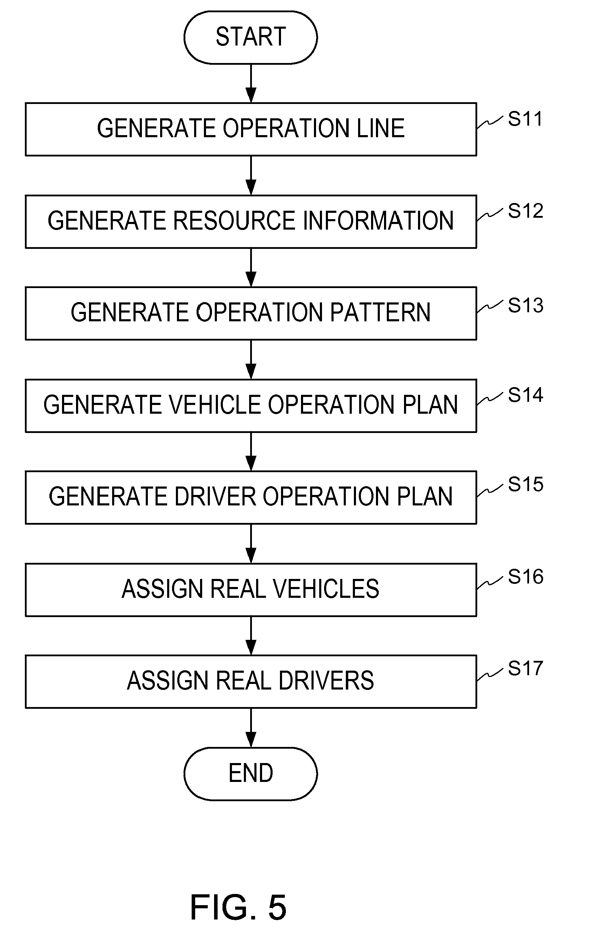

FIG. 5 is a flowchart illustrating a method for managing operation of multi-line public transportation according to an embodiment of the present disclosure. A method for managing operation of multi-line public transportation according to an embodiment may include setting an operation line, which is a transportation line that is being operated or scheduled to operate, and an operation pattern based on traffic and travel characteristics, at steps S11 to S13, generating a plan for use of one or more virtual logical vehicles (e.g., a vehicle operation plan) for the operation line using the operation line and the operation pattern at step S14, and generating a plan for use of one or more virtual logical drivers (e.g., a driver operation plan) for the operation line using the vehicle operation plan at

### step S15.

More specifically, an operation line for public transportation is generated at step S11 and an operation pattern is generated at step S13. Furthermore, in an embodiment, resource information is generated at step S12, after an operation line is generated.

In addition, the method for managing operation of multi-line public transportation in accordance with an embodiment may further include assigning real vehicles to virtual logical vehicles in accordance with the vehicle operation plan at step S16, and assigning real drivers to virtual logical drivers in accordance with the driver operation plan at step S17.

Step S11 of generating an operation line may include determining a new operation line based on an existing operation line and/or an operation line which is scheduled to operate in the future. In an embodiment, step S11 of generating an operation line may be performed by the operation line generation unit 11 of FIG. 1.

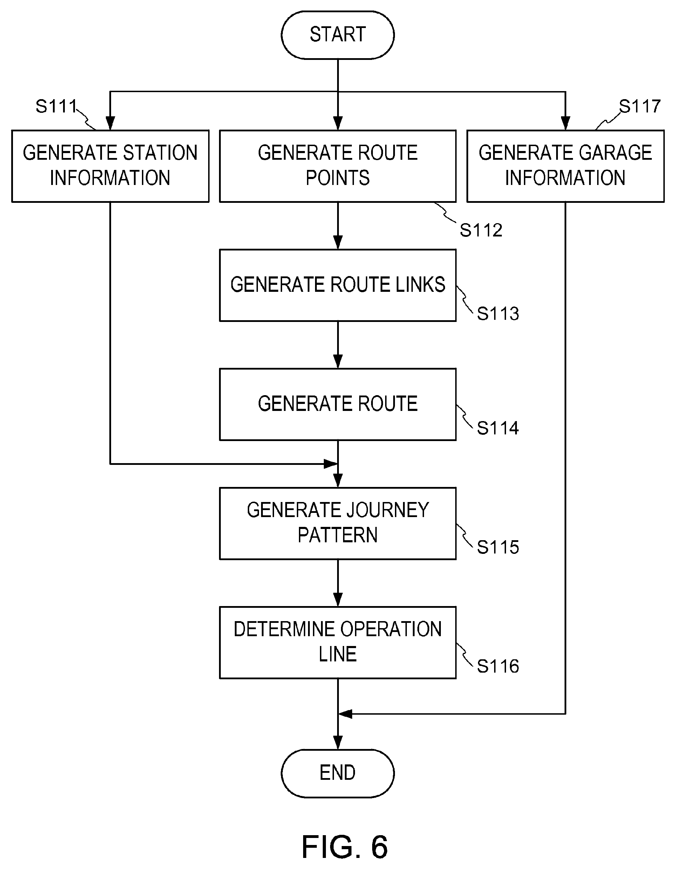

FIG. 6 illustrates generating operation line (e.g., step S11 of FIG. 5) according to an embodiment. Generating an operation line may include generating station information at step S111, generating route points at step S112, generating one or more route links at step S113, generating a route at step S114, generating a journey pattern at step S115, determining an operation line at step S116, and generating garage information at step S117.

In an embodiment, step S111 of generating station information is performed by the station information generation unit 111 of FIG. 2. In an embodiment, information on preset stations within a region to which a public transportation service is provided. The station information may include location coordinates, a name, and an ID of each station and whether the station corresponds to an origin or destination point.

In an embodiment, step S112 of generating route points is performed by the route point generation unit 112 of FIG. 2. In an embodiment, route points are generated that correspond to main nodes, such as a crossroad included in an existing operation line and/or an operation line which is scheduled to operate or a junction of the operation line within the region to which public transportation service is provided. In an embodiment, route points generated at step S112 also include a point which is expected to become a main node in the future or a point at which a characteristic of the road is changed, such as a point at which the speed limit changes. Generating route points further includes generating and storing the location coordinates and names or identifiers of the route points.

In an embodiment, step S113 of generating a route link is performed by the route link generation unit 113 of FIG. 2. In an embodiment, two route points are selected among the route points generated at step S112, and route link is generated by connecting the two route points. The route link generated at step S113 may serve as the smallest unit or building block that forms the operation line. In generating the route link, one route point of the route link may be determined to be the origin of the route link and the other route point may be determined to be the destination of the route link. The directionality of the route link from the origin point to the destination point may be used to determine the direction of a vehicle's movement in providing public transportation.

Furthermore, in generating the route link, attributes of the route link may be defined and stored at step S113. The attributes defined for the route link may include, in addition to directionality, information on the speed limit in the route link and distances between the respective route points forming the route link. The speed limit attribute may be used when calculating a movement time between stations so as to generate an operation plan.

In an embodiment, step S114 of generating a route is performed by the route generation unit 114 of FIG. 2. In an embodiment, a route corresponds to a route in the operation line, and is generated by connecting route links. Thus, the route generated at step S114 includes a group of route links. The route may be generated by connecting route links included in a group to form one route. The route links in the group may be connected in the same direction based on the directionality of the route links. That is, the destination point of a first route link in the route may be connected to the origin point of the second or next route link in the route. In an embodiment, a plurality of route links may be created for two route points.

In an embodiment generating a route further includes assigning a name or identifier to the generated route, and storing attributes of the route. Attributes may include the directionality of the route, which is determined based on the directionality attributes of the route links included in the route, the name of the route, and information on the length of the route. The length of the route may be equal to the sum of distances between the origins and the destinations of the route links included in the route.

In an embodiment, step S115 of generating a journey pattern is performed by the journey pattern generation unit 115 of FIG. 2. In an embodiment, a journey pattern corresponds to a route including stations. That is, in an embodiment, the route generated at step S114 and the station information generated at step S111 are combined to form the journey pattern.

In an embodiment, each of the stations included in the journey pattern has a number or other identifier indicating the order in which a public transportation vehicle stops at the station. For example, the first number is assigned to the station which is the closest to the origin of the route, and the last number is assigned to the station which is the closest to the end of the route. The first station and the last station in the journey pattern become the origin and destination of the public transportation operation provided on the route. In other words, the origin and destination of the public transportation on the route may be defined as points at which a public transportation vehicle enters or comes out of the route from a garage or moves to the origin or destination of another route.

The journey pattern includes attributes, such as the distance between the first station and the last station. Furthermore, the journey pattern may define a vehicle stopping point for each of the stations as a point in the route that has the minimum distance between the station and the route. The distance between respective stations may be defined as the distance between two stopping points on the route.

In an embodiment, step S116 of determining an operation line is performed by the line determination unit 116 of FIG. 2. In an embodiment, an operation line for public transportation includes one or two or more of the journey patterns generated at step S115. Determining an operation line may further include assigning an identifier to the operation line. The identifier may include a title or number that public transportation users may use to identify or recognize the operation line. In an embodiment, one operation line may include the same route as another other public transportation line, but has a different number of stopping points. For example, an express line includes a fewer number of stopping points than those of a normal line.

At step S117 garage information may be generated, including location coordinates of a garage that stores public transportation vehicles.

Referring back to FIG. 5, in an embodiment, a method for managing operation of multi-line public transportation according to an embodiment executes step S12 of generating resource information after an operation line is generated. In an embodiment, step S12 of generating resource information is performed by the resource information generation unit 12 of FIG. 1. In an embodiment, resource information includes information on one or more transportation companies and vehicles and drivers belonging to each transportation company.

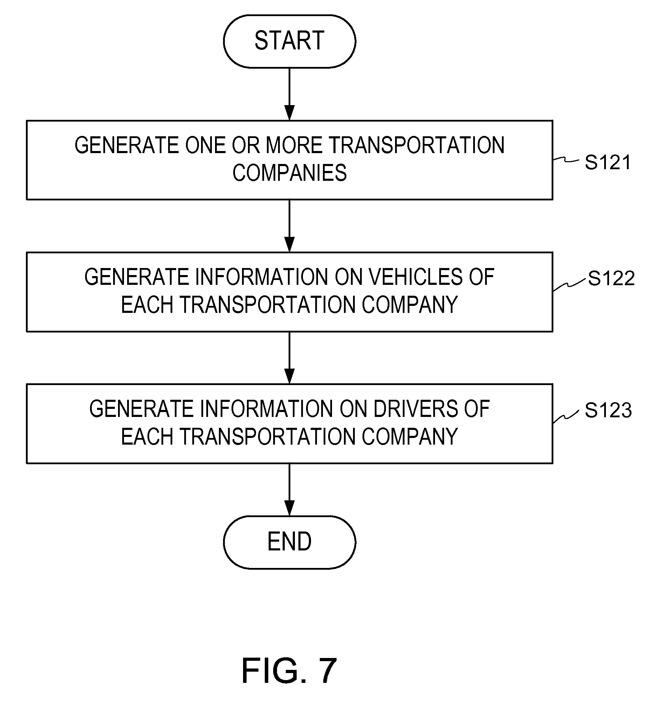

FIG. 7 illustrates a step of generating resource information according to an embodiment.

Generating resource information (e.g., S12 of FIG. 5) may include generating transportation companies which provide vehicles and drivers to a public transportation operation line at step S121, generating information on vehicles belonging to each of the transportation companies at step S122, and generating information on drivers belonging to each of the transportation companies at step S123. In an embodiment, resource information is generated based on received information on a transportation company and its vehicles and drivers. A transportation company is the largest unit assigned to a public transportation operation line and operates the public transportation operation line. Each transportation company may own and operate a plurality of public transportation vehicles and may employ a plurality of drivers.

At step S122, information on vehicles of each of the transportation companies is generated, and one or more vehicles are determined to belong to the transportation company. In an embodiment, each vehicle belongs to one transportation company. The vehicles may be classified based on the number of passengers they carry or their type (e.g., single-decker bus, double-decker bus, minibus, etc.). Each of the vehicles may have an attribute corresponding to vehicle type and an attribute corresponding to the number of passengers it can carry.

At step S123, information on drivers of each of the transportation companies is generated. In an embodiment, one driver belongs to one transportation company. In addition, information on the drivers includes the types of vehicles that can be driven by each driver. Since the type of vehicle that a driver can drive may be limited, each driver may have attributes corresponding to, for example, a driver's license type, an ID required for operation, and a password (PW). That is, in an embodiment, at step S122 information on the vehicles owned by a transportation company and the types of the vehicles is generated, and at step S123 information on drivers of each of the transportation companies, including the driver's license types, is generated.

Referring back to FIG. 5, a method for managing operation of multi-line public transportation according to an embodiment executes step S13 after step S12. In an embodiment, step S13 of generating an operation pattern is performed by the operation pattern generation unit 13 of FIG. 1.

In an embodiment, the type (hereafter, referred to as "day type") of a day on which public transportation is to operate (hereafter, referred to as "operation day") is determined, an operation line for each day type is selected and set, and a characteristic for time bands of each day type is determined and applied to a specific route or portion of a route of each set operation line. For example, the characteristic of a time band may be applied between one station and the next station or to a route link. In an embodiment, the characteristic of a time band applied to a route or portion of a route indicates demand for public transportation and an operation time for each time band depending on traffic situations.

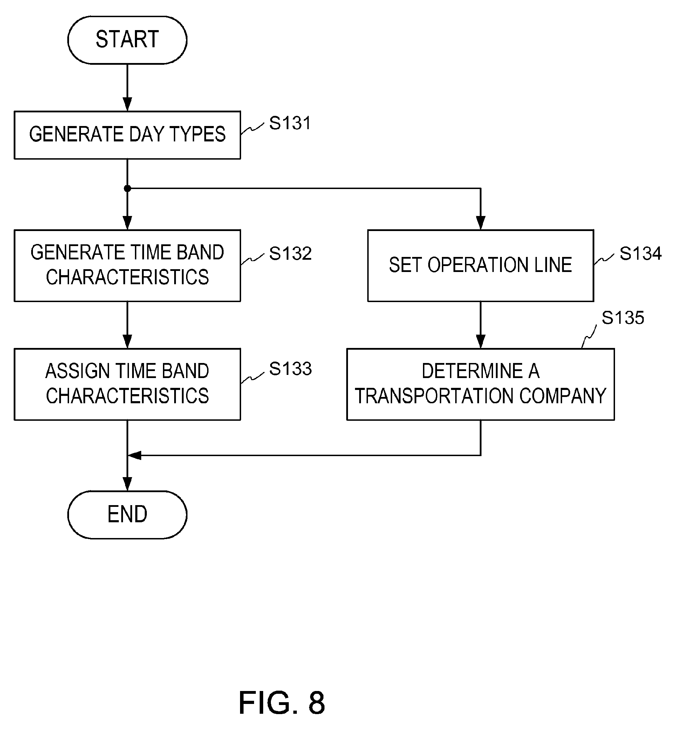

FIG. 8 is a flowchart illustrating generating an operation pattern (e.g., S13 in FIG. 5) according to an embodiment. Generating an operation pattern may start with step S131 of determining a day type of each of a plurality of operation days. The day type of an operation day may be determined based on various factors having an influence on demand for public transportation, such as days of the week, national holidays, vacation seasons, events, and holidays.

At step S132, time band characteristics are generated for each day type. In an embodiment, a characteristic for each of one or more specific time bands for each day type may be generated. For example, when a time interval between successive vehicles needs to be shortened because demand rapidly increases at six to nine a.m. on a specific operation day, a time band characteristic for minimizing the time interval between six to nine a.m. of the operation day may be generated at step S132.

At step S133, a time band characteristic is assigned to a specific route or portion of a route for each day type. For example, the time band characteristic generated at step S132 may be applied to a specific section of a route for which demand for public transportation is concentrated in the corresponding time band rather than the entire route of public transportation. The portion of the route to which the time band characteristic is applied may be a route link or a section between stations.

After the day types are determined at step S131, an operation line for each day type is selected and set at step S134. At step S134, an operation line may be set for each day type based on demand for public transportation in a specific route or portion of the route depending on the day type. In an embodiment, after an operation line for each day type is determined at step S134, a transportation company for each operation line may be set at step S135.

In an embodiment, the operation line set for a day type, the routes or portions of routes to which time band characteristics for each day type is applied, and the transportation company for each operation line may be grouped to generate an operation plan. Once the day type of an operation day is determined, the route or portion of the route to which time band characteristics of the operation day is applied, an operation line for each day type, and a transportation company for each operation line may be determined together according to the determined day type, and used to generate an vehicle operation plan at step S14 and/or a driver operation plan step S15, which will be hereinafter described in more detail.

Referring back to FIG. 5, a method for managing operation of multi-line public transportation according to an embodiment of includes generating a vehicle operation plan at step S14. In an embodiment, step S14 is performed after step S13.

In an embodiment, step S14 of generating a vehicle operation plan is performed by the vehicle operation plan generation unit 14 of FIG. 1. In an embodiment, the operation line generated at step S11, and other information generated at step S13 such as the information on the type of the operation day, the route or portion of the route to which the time band characteristics for each day type are applied, and the transportation company, are received to generate a vehicle operation plan for each operation day. The vehicle operation plan generated step S14 may be generated based on virtual logical vehicles instead of real vehicles.

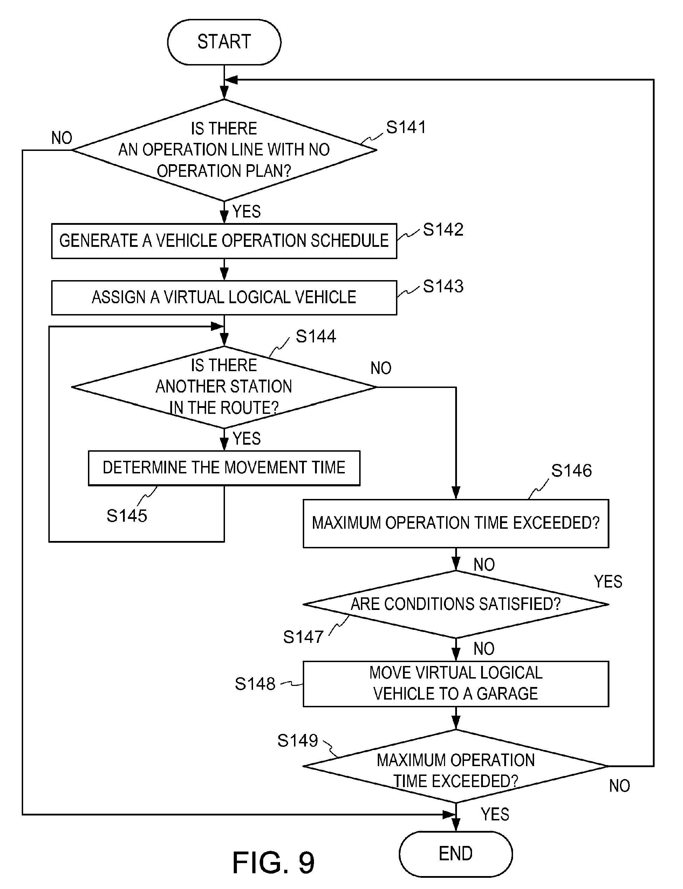

FIG. 9 is a flowchart illustrating a step of generating a vehicle operation plan (e.g., S14 in FIG. 5) according to an embodiment. Generating a vehicle operation plan may begin with checking whether there is an operation line for which a vehicle operation plan is not generated, among the operation lines that have been set according to the day type of an operation day at step S141.

When there is an operation line for which a vehicle operation plan is not generated, a plurality of vehicle operation schedules are generated by assigning a first vehicle departure time, a last vehicle departure time, and an interval between successive vehicles to each route of the operation line at step S142. That is, a plurality of vehicle operation schedules in which a plurality of vehicle departure times from the first vehicle to the last vehicle are set for each route of the operation line may be generated at step S142. Then, virtual logical vehicles may be assigned to each of the vehicle operation schedules in subsequent steps. In an embodiment, steps S141 and S142 are executed by the operation time assigning unit 141 of FIG. 3.

At step S143, virtual logical vehicles may be assigned to the vehicle operation schedules, and a movement time of the virtual logical vehicles checked. The entire operation time of the assigned virtual logical vehicles may be checked throughout steps S143 to S146. In an embodiment, steps S143 to S146 are executed by the operation time checking unit 142 of FIG. 3.

At step S143, when there is a vehicle operation schedule to which no virtual logical vehicle is assigned, a new virtual logical vehicle is generated and assigned to the vehicle operation schedule. The departure time of the virtual logical vehicle at the first station and the movement time from the garage to the first station are checked. Then, whether there is another station in the route is checked at step S144. When the next station exists, the movement time from the current station to the next station is determined at step S145. The process of checking for the next station and determining the movement time to the next station may be repeated up until the virtual logical vehicle is moved to the last station. When there are no more stations, the operation of the virtual logical vehicle on the route is terminated, and the termination time is checked at step S146.

At step S146, a method in accordance with an embodiment determines whether or not the operation time of the virtual logical vehicle, after terminating operation on the assigned route, exceeds a preset maximum operation time per day. If not, a method in accordance with an embodiment determines whether conditions under which the virtual logical vehicle can perform another operation are satisfied at step S147. When the virtual logical vehicle satisfies the conditions for performing another operation, the virtual logical vehicle is assigned to a vehicle operation schedule of another route in the same or another operation line, and steps S143 to S147 are then repeated.

In an embodiment, after operation on one route of an operation line is terminated, the conditions considered at step S147 may include the following: whether the operation of the next route starts within a preset time limit; whether the next route is in an operation line assigned to the transportation company of the virtual logical vehicle; and whether the virtual logical vehicle can move to the first station of the next route before the start time of the next route, after arriving at the last station of the previous route.

At step S148, if the operation time of the virtual logical vehicle exceeds the maximum operation time per day after having terminated an operation, or the conditions for performing another operation are not satisfied, the virtual logical vehicle is moved to the garage closest to the last station of the route on which the virtual logical vehicle terminated operation. In an embodiment, the time at which the virtual logical vehicle arrives at the garage is checked.

At step S149, the total operation time of the virtual logical vehicle is checked. In an embodiment, the total operation time of the virtual logical vehicle includes the time it takes to move from the last station of the route on which operation was terminated to the garage. If the total operation time of the virtual logical vehicle, including the time it takes to arrive at the garage, does not exceed the maximum operation time per day, a process of searching for a new route may be performed. In an embodiment, whether a new route is in an operation line assigned to the transportation company of the virtual logical vehicle is checked as a condition for beginning a new operation. If so, the virtual logical vehicle may be assigned to a vehicle operation plan of new route of the operation line, and steps S141 to S147 are repeated.

In an embodiment, steps S147 to S148 are executed by the operation line searching unit 143 of FIG. 3. The process illustrated in and described with reference to FIG. 9 may be performed until virtual logical vehicles are allocated to all of the vehicle operation schedules of all operation lines set for each operation day.

Referring back to FIG. 5, a method for operating multi-line public transportation according to an embodiment includes generating a driver operation plan at step S15. In an embodiment, S14 is performed after a vehicle operation plan is generated at step S14. In an embodiment, step S15 of generating a driver operation plan is performed by the driver operation plan generation unit 15 of FIG. 1. In an embodiment, generating a driver operation plan includes receiving the vehicle operation plan generated at step S14 and assigning a logical driver to the virtual logical vehicles.

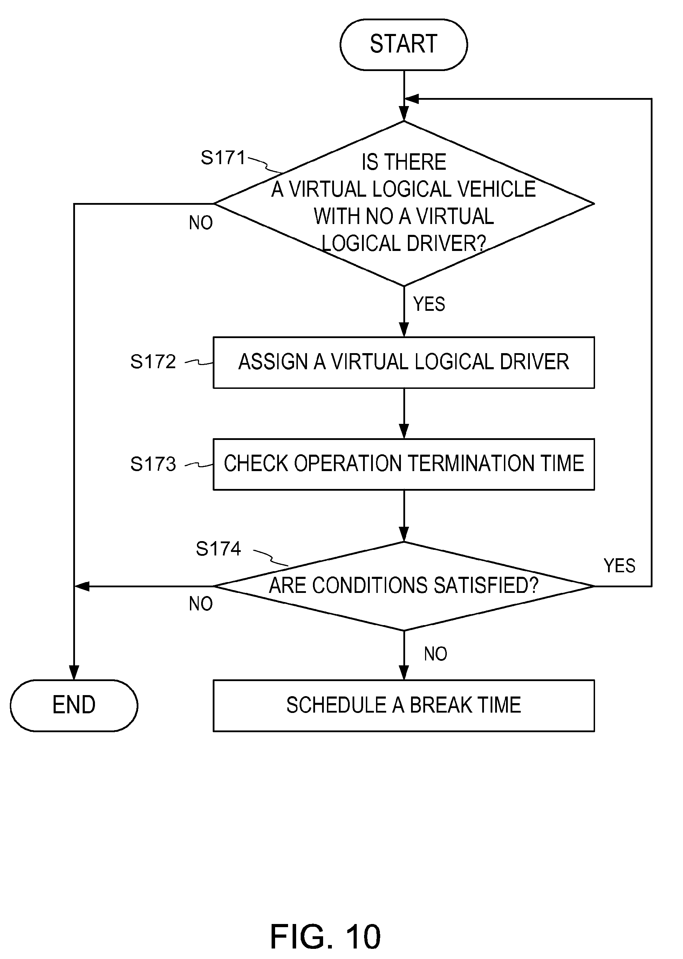

FIG. 10 is a flowchart illustrating a step of generating a driver operation plan according to an embodiment. Generating a driver operation plan may start with checking whether there is a virtual logical vehicle to which no virtual logical driver is assigned, among the logical vehicles generated at step S14 at step S151.

When there is a virtual logical vehicle to which no virtual logical driver is assigned, a new virtual logical driver is generated and assigned to an operation plan of the virtual logical vehicle to which no logical driver is assigned, at step S152.

Then, in an embodiment, the operation termination time of the operation plan of the virtual logical vehicle to which the virtual logical driver was assigned is checked to calculate the operation time of the virtual logical vehicle at step S153.

At step S154, a method in accordance with an embodiment determines whether or not conditions for establishing an operation plan of the virtual logical driver are satisfied. If such conditions are satisfied, operation plans of virtual logical vehicles to which no virtual logical drivers are assigned are searched for and the next operation plan is assigned to a virtual logical driver that has terminated operation.

For example, one condition may be whether or not the virtual logical driver has exceeded a maximum operation time in performing an operation on a route. If so, then a break time may be scheduled for the driver at step S155. That is, if it is determined that the operation time of the logical driver exceeds a maximum operation time per operation, i.e., that a condition has not been met, a preset minimum break time may be scheduled for the virtual logical driver at step S155, and the next operation plan of a virtual logical vehicle may be assigned to the logical driver after the break time.

Returning to S154, another condition for establishing a driver operation plan may be whether the virtual logical driver has exceeded a maximum operation time per day or whether the time it takes to complete another operation on another route would result in the virtual logical driver exceeding the maximum operation time per day. If so, then the process may end.

Furthermore, if the operation time of the virtual logical driver exceeds the maximum operation time per day, the logical driver is not assigned to another operation plan of a virtual logical vehicle.

A driver operation plan is generated at step S15 of FIG. 5. In an embodiment, a driver operation plan is based on the assumption that a virtual logical driver may drive a plurality of vehicles and operate on a plurality of lines, and the minimum operation unit for the virtual logical driver is a route in an operation line.

Referring back to FIG. 5, a method for managing operation of multi-line public transportation according to an embodiment includes assigning a real vehicle at step S16 after a driver operation plan is generated at step S15. At step S16, a real vehicle is assigned according to the virtual logical vehicle operation plan generated at step S14. At step S14, the number of vehicles to efficiently operate a public transportation line on an operation day may be determined, but real vehicles are not assigned. Thus, at step S16, a real vehicle of a transportation company may be assigned to the virtual logical vehicles in accordance with the logical vehicle operation plan generated at step S14. That is, physical vehicles may be allocated for actual operation on each operation day.

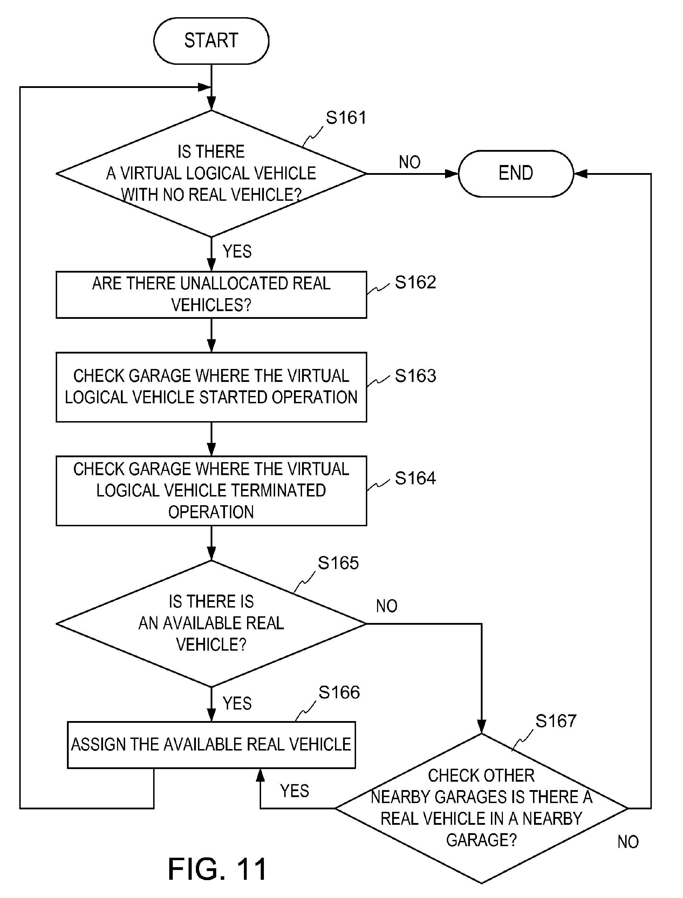

FIG. 11 is a flowchart illustrating a step S16 of assigning a real vehicle according to an embodiment. Assigning a real vehicle starts with checking whether there is a virtual logical vehicle to which no physical vehicle is assigned at step S161.

If there is a virtual logical vehicle to which no real vehicle is assigned, the transportation company of the virtual logical vehicle may be checked, and a vehicle list of the transportation company may be checked to determine whether there are unallocated real vehicles, at step S162.

Then, the garage at which the virtual logical vehicle starts operation on an operation day may be checked at step S163. In order to allocate a real vehicle to the virtual logical vehicle on the operation day, the garage at which the virtual logical vehicle starts operation on the operation day is checked to determine whether a real vehicle is present. For example, if the real vehicle is in the garage when the virtual logical vehicle terminates operation on the day before the operation day, the real vehicle may be available to be assigned to the virtual logic vehicle. Thus, whether there is an unallocated physical vehicle in the garage of a route at which the virtual logical vehicle terminated operation on the day before the corresponding operation day may be checked at step S164.

Then, the results of steps S163 and S164 are checked to determine whether real vehicles exist in the garage at which the virtual logical vehicle starts operation, at step S165. If a garage where a real vehicle exists corresponds to a garage from which a virtual logical vehicle starts, the real vehicle in the garage is assigned to the logical virtual vehicle at step S166.

If no such physical vehicle exists in the garage, other nearby garages may be checked for the presence of an available real vehicle and assigned to the virtual logical vehicle at step S167. If there are no available real vehicles belonging to the transportation company in any garage, the process ends.

Steps S161 to S166 may be repeated to assign real physical vehicles to all of the virtual logical vehicles.

Referring back to FIG. 5, a method for managing operation of multi-line public transportation according to an embodiment includes assigning a real driver at step S17 after assigning a real vehicle at step S16.

At step S17, a real driver may be assigned based on the virtual logical driver operation plan generated at step S15. At step S15, the number of drivers to efficiently operate a public transportation line on an operation day may be determined, but real drivers are not assigned. Thus, at step S17, a real driver of the transportation company is assigned to the virtual logical driver according to the logical driver operation plan generated at step 15. That is, a physical driver for actual operation on each operation day may be allocated.

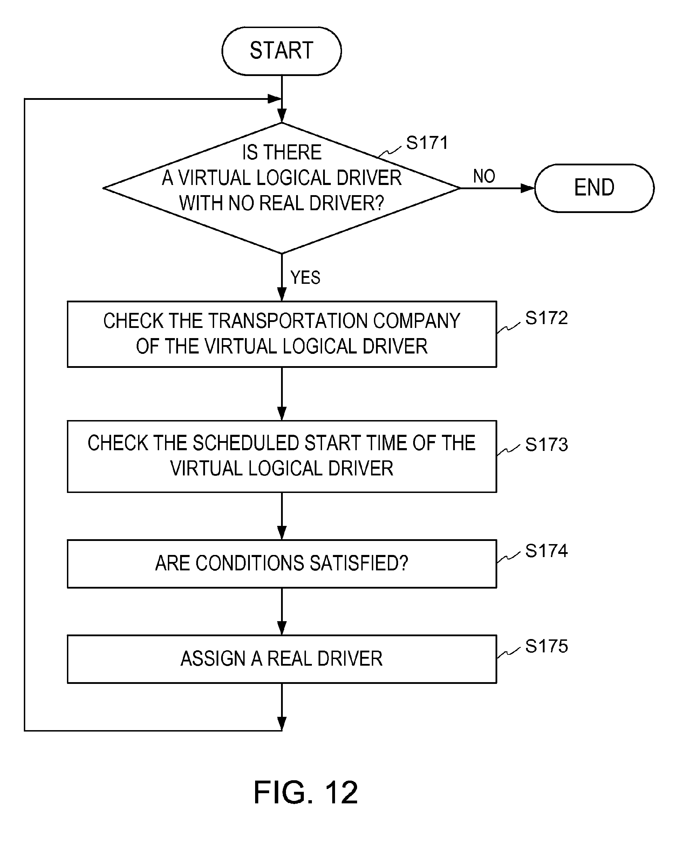

FIG. 12 is a flowchart illustrating a step of assigning a real driver (e.g., S17 of FIG. 5) according to an embodiment. At step S171, step S17 may start with checking whether there is a virtual logical driver to which no real driver is assigned, by referring to the logical driver operation plan generated at step S15.

When there is a virtual logical driver to which no real driver is assigned, a transportation company to which the virtual logical driver belongs is checked at step S172, and the time that the virtual logical driver is scheduled to begin on a route, generated at step S15, is checked at step S173.

Then, real drivers of the transportation company that are available for the scheduled time are searched for at step S174.

In an embodiment, one or more conditions are checked at step S174 to assign a real driver from among the available real drivers to the virtual logical driver at step S175. In an embodiment, the conditions may include: an available driver that worked a night-shift on the previous day cannot work in the morning of the next day and an available driver that has worked for a preset number of consecutive days cannot work another consecutive day. After such conditions are checked, the allocation of real drivers for each operation day of the public transportation may be ended.

As described above, a method and system for managing operation of multi-line public transportation according to embodiments of the present disclosure may generate an operation plan using an operation pattern as well as an operation line. Since embodiments do not merely consider the number of vehicles, embodiments are able to meet demand for public transportation services that fluctuates over time.

Furthermore, embodiments employ virtual logical vehicles and virtual logical drivers. As a result, real vehicles and drivers are not subordinated to a single route or operation line. Thus, a method and system in accordance with an embodiment may establish an operation plan in which one vehicle and one driver may be assigned to a plurality of routes and/or operation lines.

As described above, a method and system may flexibly allocate real vehicles and drivers for each operation day in consideration of demand for public transportation on specific days and at specific by considering time band characteristics on a specific day. As a result, efficiency in allocating resources is improved in an operation plan of a public transportation line in accordance with an embodiment and the ability to meet demand for public transportation on a given operation day is improved, thus also improving the quality of the public transportation service.

While the present invention has been described with respect to specific embodiments, it will be apparent to those skilled in the art that various changes and modifications may be made without departing from the spirit and scope of the invention. Therefore, the scope of the present invention is not limited by the foregoing embodiments, and should be defined by the following claims and the equivalent thereto.

## Claims

1. A method for managing operation of multi-line transportation, the method comprising:
setting an operation line of a transportation system;
generating an operation pattern for the operation line based on a day type of an operation day;
generating a vehicle operation plan using the operation line and the operation pattern;
generating a driver operation plan based on the vehicle operation plan;
assigning real vehicles to the vehicle operation plan; and
assigning real drivers to driver operation plan.

2. The method of claim 1, wherein the operation line of the transportation system is generated by:
generating information about a predetermined station;
generating a plurality of route points to be included in the operation line;
generating route links by selecting 2 route points among the plurality of route points;
generating a route by inter-connecting the route links;
generating a plurality of journey patterns including an operation route and stations assigned to the operation route by combining the route with the information about the station; and
determining the operation line including one or more than 2 journey patterns.

3. The method of claim 1, wherein generating the operation pattern comprises:
generating at least one time band characteristic of a plurality of time bands of the operation day, the time band characteristic being associated with demand for transportation; and
assigning the time band characteristic to a section of a route in the operation line.

4. The method of claim 3, further comprising determining a transportation company for the operation line.

5. The method of claim 1, wherein generating the vehicle operation plan comprises:
generating a vehicle operation schedule for each route in the operation line;
generating a virtual logical vehicle; and
assigning the virtual logical vehicle to a corresponding vehicle operation schedule.

6. The method of claim 5, further comprising:
determining whether conditions for assigning the virtual logical vehicle to another route are satisfied; and
assigning the virtual logical vehicle to another route corresponding to another vehicle operation schedule if the conditions are satisfied.

7. The method of claim 1, further comprising:
generating resource information for the operation line,
wherein the vehicle operation plan is generated using the resource information, and
wherein the resource information includes transportation company information, vehicle information, and driver information.

8. The method of claim 5, wherein generating the vehicle operation plan further comprises:
checking a movement time of the virtual logical vehicle between 2 stations;
determining whether an operation time of the virtual logical vehicle exceeds a maximum operation time;
determining whether conditions for another operation are satisfied;
if conditions for another operation are satisfied and the operation time does not exceed the maximum operation time, determining if there is another operation line without a vehicle operation plan; and
if there is another operation line without assigning the virtual logical vehicle to the other operation line.

9. The method of claim 1, wherein generating the driver operation plan includes:
checking if there is a virtual logical vehicle with no virtual logical driver assigned;
if there is a virtual logical vehicle with no virtual logical driver assigned, generating a virtual logical driver; and
assigning the virtual logical driver to the virtual logical vehicle.

10. A system for managing operation of multi-line transportation, the system comprising:
at least one processor; and
at least one non-transitory computer-readable medium having stored thereon a program that, when executed, causes the processor to perform a method, the method comprising:
setting an operation line of a transportation system;
generating an operation pattern of the operation line based on the day type of the operation day;
generating a vehicle operation plan using the operation line and the operation pattern;
generating a driver operation plan based on the vehicle operation plan;
assigning real vehicles to the vehicle operation plan; and
assigning real drivers to the driver operation plan.

11. The system of claim 10, wherein generating the operation pattern comprises:
generating at least one time band characteristic of a plurality of time bands of the operation day, the time band characteristic being associated with demand for transportation; and
assigning the time band characteristic to a section of a route in the operation line.

12. The system of claim 11, further comprising determining a transportation company of the operation line.

13. The system of claim 10, wherein generating the vehicle operation plan comprises:
generating a vehicle operation schedule for each route in the operation line;
generating a virtual logical vehicle; and
assigning the virtual logical vehicle to a route and a corresponding vehicle operation schedule.

14. The system of claim 13, further comprising:
checking a movement time of the virtual logical vehicle between 2 stations;
determining whether an operation time of the virtual logical vehicle exceeds a maximum operation time;
determining whether conditions for another operation are satisfied;
if conditions for another operation are satisfied and the operation time does not exceed the maximum operation time, determining if there is another operation line without a vehicle operation plan; and
if there is another operation line without assigning the virtual logical vehicle to the other operation line.
